# EUROPEAN PATENT APPLICATION

(11) **EP 4 732 991 A1**
(43) Date of publication of application: **29.04.2026**
(21) Application number: 25209911.4
(22) Date of filing: 20.10.2025
(51) Int. Cl.: B23Q 3/00, B23Q 5/34, B23D 47/04, B27B 5/065, B27C 5/06, B27M 1/08, B23Q 3/06

(54) **MACHINE FOR MACHINING A WORKPIECE**

(30) Priority: 22.10.2024 IT 202400023565
(71) Applicant: C.M.S. Costruzioni Macchine Speciali S.P.A., 24019 Zogno (BG) (IT)
(72) Inventor: ZENERE, Dario, Zogno (BG) Bergamo (IT)
(74) Representative: Gallo, Gianluca

(57) **Abstract**

Described is a machine (M) for machining a workpiece, in particular a slab of glass, wood, wood-derived materials, plastic materials, composite materials, stone materials, metal, comprising: a work table (1) for supporting the workpiece; a machining device (2) for machining the workpiece; a pressure beam (P), movable relative to the work table (1), along a vertical direction (Z) perpendicular to the work table (1), between a raised position, wherein it is distal from the work table (1) and from the workpiece, and a lowered position, wherein it is proximal to the work table (1) and is configured for locking the workpiece on the work table (1); and a system (S) for moving the pressure beam (P), for moving the pressure beam (P) between the raised position and the lowered position, and vice versa, wherein the movement system (S) comprises a motion transmission mechanism (T), movable relative to the pressure beam (P), along a transverse direction (Y) perpendicular to the vertical direction (Z), the motion transmission mechanism (T) being configured to transform its movement relative to the pressure beam (P) in the movement of the pressure beam (P) relative to the work table (1) and therefore to the workpiece, between the raised position and the lowered position, and vice versa.

## Description

This invention relates to a machine for machining a workpiece, in particular for machining a slab. Specifically, but not exclusively, the invention may be used for machining slabs of layered glass. In effect, this invention may also be used for machining other materials, such as, for example, slabs and/or panels made of wood, wood-derived materials, plastic materials, composite materials, stone materials, metal.

Reference will be made below in particular to slabs of layered glass, called simply slabs, but the invention is not limited, as mentioned above, to this type of material.

Cutting layered glass slabs is a very complex operation. These slabs comprise an upper slab of glass, a lower slab of glass and an intermediate sheet, or film, of synthetic plastic material, usually made of Polyvinyl Butyral (PVB).

The prior art machines for machining slabs of layered glass perform the cutting of the slabs, and basically comprise: a work table, defining a work surface, which extends in a longitudinal direction, the work table being intended to receive and support the slab to be machined; a beam (or more than one), positioned above the work table and extending in a direction transversal to the longitudinal direction of the work table, and comprising: a machining unit; means for moving the slab on the work table in the longitudinal direction; a heating unit, positioned below the work table, and movable along a vertical direction, between a rest position, wherein it is distal from the intermediate sheet, and an operating position wherein it is proximal to the intermediate sheet interposed between the two slabs of glass of the slab of layered glass, for heating it; and a pressure device, coupled to the beam and movable with the beam, relative to the work table, along a vertical axis, perpendicular to the work table, between a raised position, wherein it is distal from the work table, and a lowered position, wherein it is proximal to the work table and is configured to lock the slab on the work table.

Two machining units, one upper and one lower, are mounted on the beam, in the transverse direction, relative to the work table and positioned, respectively, on an upper carriage and a lower carriage, and configured for scoring and breaking out, respectively, the upper slab and the lower slab of the slab of layered glass slab, along a machining line parallel to the transverse direction of the beam.

In other types of machines, the lower machining unit may not be mounted on the beam, but on an independent beam, positioned, similarly, below the work table.

In both types of machines, the upper and lower machining units support different machining heads, the main ones are: a scoring head, a breakout head, and a head for cutting the intermediate sheet of plastic material. In addition to the breakout heads, positioned on the machining units, there is a breakout bar positioned below the work table, parallel with the machining line, and movable with a motion which has a component along the vertical direction.

The process for cutting the slab of layered glass, in known manner, comprises the following steps:
- scoring along the machining line of both the slabs of glass, upper and lower, using the scoring heads, upper and lower, moved along the machining direction;
- moving on the upper slab of glass, along the machining line, in the opposite direction to that of the scoring, the upper breakout head, provided with a pressure roller which comes into contact with the upper slab of glass, in such a way as to cause the breakout of the lower slab of glass;
- lifting a first portion of the layered slab of glass which is on one side of the machining line by moving upwards the breakout bar which pushes upwards the other lower slab of glass;
- heating the intermediate sheet of plastic material by means of localised heating, performed along the machining line, by means of the heating unit brought to the operating position;
- cutting the heated intermediate sheet by means of the cutting head of the intermediate sheet;
- separating the two portions of cut slab.

During the various steps described above the pressure device may be brought to different heights from the slab, or in contact with the slab, or under pressure on the slab, as a function of the various machining operations. The pressure device plays a role of fundamental importance, since the quality of the cut is associated with its correct operation. In order to guarantee an optimum cutting quality of the slab it is important to always guarantee, using the movement system of the pressure device, a correct positioning of the pressure device with the slab, and therefore in particular guarantee that: the vertical movement of the pressure device is perfectly parallel to the work table during its entire stroke; the pressure device does not undergo inclinations and failures if the slab to be cut is small and positioned at an end of the beam; the pressure device guarantees a constant pressing force at every point of the vertical stroke; the position of the pressure device relative to the surface of the slab is precise and predetermined during all the machining steps.

The prior art proposes various solutions to deal with this problem. A prior art solution comprises a system for moving the pressure device using electrical or pneumatic actuators and a pinion-rack transmission and torsion bar system. However, this solution has several drawbacks: since the pressing forces involved are high, and since the beams are large, even up to five metres in length, a torsion bar would need to be used which guarantees a certain rigidity, with an increase in weight, dimensions and, therefore, costs. Moreover, the gears of the pinion, which are normally subject to wear in intensive use, would not guarantee, once worn even slightly, the parallelism between the pressure device and the work table, with consequent imprecision in the performance of the machining operations. Moreover, the beam, to which the pressure device is coupled, due to its considerable mass must be counterbalanced in order to control the pressure force.

Another prior art solution involves the use of screw jacks actuated by an electric actuator for moving the pressure device. However, this solution also has the drawback of not guaranteeing the stability of the pressure device during the machining, with frequent small movements, and consequent wear of the actuator, of the reduction gear unit and of the screw.

A further prior art solution is that of using, for moving the pressure device, motor-driven screws using an electric actuator. This solution also has various drawbacks, including the continuous maintenance and checking of the parallelism of the beam on which the pressure device is positioned by an operator, with a consequent increase in the machine downtimes, and the fact that the pressure force of the pressure device is guaranteed by the electric actuators, which are constantly under stress, with consequent premature wear.

A further example is given by patent document CN 112792919 A which shows a device for moving the pressure device comprising an inclined surface.

For this reason, the need remains of having a system for moving the pressure device which guarantees that the vertical pressing movement of the pressure device is perfectly parallel to the work table during its entire stroke, which allows the pressure device not to undergo inclinations and yielding if the glass slab is small and positioned at an end of the beam, which guarantees a constant pressing force by the pressure device along its entire vertical stroke, which allows a precise position of the pressure device to be maintained and predetermined relative to the slab to be machined during all the machining steps, which has a mechanical structure which is not very subject to wear and maintenance, which has reduced dimensions, which guarantees a precise positioning and fluidity of movement, and which does not require counterbalancing.

The aim of this invention is to provide a machine for machining a workpiece which overcomes the above-mentioned drawbacks of the prior art. Said aim is fully achieved by the machine for machining a workpiece according to the invention as characterised in the appended claims.

This description relates to a machine for machining a workpiece.

The machine is suitable for machining, for example cutting, a workpiece, in particular a slab or a panel which may be made of glass, wood, wood-derived materials, plastic materials, composite materials, stone materials, metal. Reference will be made in the following description to slabs of glass, in particular layered glass, referred to below simply as slabs, but the scope of protection of the invention is not limited to this type of material and to this form of workpiece.

The slabs of layered glass comprise an upper slab of glass, a lower slab of glass and an intermediate sheet, or film, of synthetic plastic material, usually Polyvinyl Butyral (PVB), which has the function of holding together the layers of glass in the event of breakage.

The machine comprises a base, for resting on the ground, on which is positioned a work table, which extends along a longitudinal direction, and is suitable for receiving and supporting the slab to be machined.

The machine also comprises a machining device, defining a machining zone, for machining the slabs, positioned, in an example, in the proximity of an end of the work table, which is thus divided into a zone for loading and/or unloading the slabs and a machining zone; in this example, however, the slabs may be loaded and/or unloaded also in the zone opposite to the loading and/or unloading zone, directly on and by the machining device.

In another example, the machining device may be interposed between two zones of the work table, and both zones may be used as loading and/or unloading zones.

Advantageously, the work table may comprise, in the loading zone, a tippable loading system, wherein a portion of the work table, positioned preferably at one end of the table, can be tipped, rotating about an axis, positioned in a transverse direction, at right angles to the longitudinal direction, to facilitate the loading of the slab on the work table by an operator, or an automated loading system.

In an example, the work table may comprise, in known manner, a device for transporting the slab, such as, for example, motor-driven chains, motor-driven rollers, motor-driven belts, or a plurality of grippers mounted on a crosspiece, for transporting the slab from the loading zone towards the machining device and vice versa.

In the absence of the device for transporting the slab, the slab may be transported manually on the work table by an operator towards the machining device, and unloaded in the same way.

Advantageously, the work table may comprise a plurality of openings, supplied with compressed air, which create an "air curtain", in such a way as to facilitate the transporting of the slab on it.

The machining device may comprise one or more beams, positioned along a direction transversal to the longitudinal direction, and one or more pressure devices coupled to the respective beams. Reference will be made below to one beam but it will be understood that there may also be two or more beams on the machine having the same features. The assembly comprising the beam and the pressure device, the two elements being coupled, will hereinafter, for simplicity, be referred to as the pressure beam.

The work table may comprise two uprights, respectively positioned at two opposite sides of the work table, and projecting from the work table, along a vertical direction, orthogonal to the longitudinal direction and to the transverse direction. Advantageously, the pressure beam is slidably coupled to the two uprights, in such a way that it can move along the vertical direction. In an example, each upright is provided with one or more guides, and the pressure beam with one or more runners, coupled to the respective guides.

The pressure beam is therefore movable, relative to the work table, along the vertical direction, in all the positions between a raised position, wherein it is distal from the work table, and a lowered position, wherein it is proximal to the work table, and is configured to come into contact with the slab on the work table.

Advantageously, the portion of the work table on which the slab rests, proximal to the machining device and below the pressure beam, may be movable along the longitudinal direction, using an electric, pneumatic or of other known type of actuator, for separating the two portions of cut slab, as described in more detail below. In an example, the pressure beam may be coupled to the portion of work table on which the slab rests, proximal to the machining device and may therefore be integrally movable in the longitudinal direction, to perform the separation of the two portions of cut slab. In this example, thanks to the mobility along the longitudinal direction of the portion of work table on which the slab rests, and of the pressure beam, the portion of cut slab is "gripped" between pressure beam and the portion of work table, in such a way as to be separated from the other portion of slab.

Advantageously, the pressure beam, in its portion which comes into contact with the slab positioned on the work table, is made of elastic material, to prevent damaging the slab. In an example, the portion of work table on which the slab rests, proximal to the machining device and below the pressure beam, is made of elastic material, to avoid damage to the slab during machining.

The machining device may comprise a first machining unit, slidably coupled to the pressure beam by means of a slide. Advantageously, the slide may be movable along the transverse direction, defining a machining line, on guides positioned along the pressure beam, and can be moved by an actuator, preferably electric.

In an example, the first machining unit may comprise one or more scoring heads configured for scoring the upper surface of the slab along the machining line, thanks to the movement of the first machining unit along the transverse direction. The one or more scoring heads may be provided, in known manner, with a disc blade, also known as a scoring wheel, or a scoring knife. Advantageously, the one or more scoring heads may be movable, by means of an actuator of an electric and/or pneumatic and/or of other known types, along the vertical axis, between a scoring position wherein they make contact with the slab, for scoring the slab, and a rest position, distal from the slab. Alternatively or in combination with the one or more scoring heads, the first machining unit may comprise one or more breakout heads, each provided with one or more rollers, suitable for making contact with the upper part of the slab, along the entire width of the slab in the transverse direction, thanks to the movement of the first machining unit along the transverse direction, in such a way as to cause the breaking out of the lower surface of the slab. Advantageously, the one or more breakout heads may be movable, by means of an actuator of an electric and/or pneumatic and/or other known type, along the vertical axis between a rest position, distal from the slab and a breakout position wherein they make contact with the slab to perform the breaking out. Alternatively or in combination with the heads described above, the first machining unit may comprise a head for removal of the coating and/or a head for cutting the intermediate film of the slab and/or other types of machining heads.

The heads of the first machining unit may be positioned on a single slide, movable on the pressure beam along the transverse direction, as described above, or they may be positioned on independent slides, which are also movable on the pressure beam along the transverse direction. In another example, at least two machining heads of the first machining unit are positioned on a single slide, which is movable on the pressure beam along the transverse direction, and at least one machining head of the first machining unit is movable on an independent slide.

Advantageously, the machining device may comprise a second machining unit positioned below the work table, movable along the transverse direction, parallel to the machining line or along the machining line.

The second machining unit may be slidably coupled to the pressure beam by means of a slide, on guides arranged along the pressure beam, in a portion of it positioned below the work table, or it may be slidably coupled to an independent beam, provided with guides, parallel to the pressure beam, and positioned below the work table. In both cases, the slide may be moved by an actuator, preferably electric.

In an example, the second machining unit may comprise one or more scoring heads configured for scoring the lower surface of the slab along the machining line, thanks to the movement of the second machining unit along the transverse direction. The one or more scoring heads may be provided, in known manner, with a disc blade, also known as a scoring wheel, or a scoring knife. Advantageously, the one or more scoring heads may be movable, by means of an actuator of an electric and/or pneumatic and/or of other known types, along the vertical axis, between a scoring position wherein they make contact with the slab, for scoring the slab, and a rest position, distal from the slab. Alternatively or in combination with the one or more scoring heads, the second machining unit may comprise one or more breakout heads, each provided with one or more rollers, suitable for making contact with the upper part of the slab, along the entire width of the slab in the transverse direction, thanks to the movement of the second machining unit along the transverse direction, in such a way as to produce the breaking out of the upper surface of the slab. Advantageously, the one or more breakout heads may be movable, by means of an actuator of an electric and/or pneumatic and/or other known type, along the vertical axis between a rest position, distal from the slab and a breakout position wherein they make contact with the slab to perform the breaking out. Alternatively or in combination with the heads described above, the second machining unit may comprise a head for removal of the coating and/or a head for cutting the intermediate film of the slab and/or other machining heads.

Advantageously, the heads of the second machining unit may be positioned on a single slide, movable on the pressure beam, and/or on the independent beam, along the transverse direction, as described above, or they may be positioned on independent slides, which are also movable on the pressure beam, or on the independent beam, along the transverse direction.

In another example, at least two machining heads of the second machining unit are positioned on a single slide, movable on the pressure beam, and/or on the independent beam, along the transverse direction, and at least one machining head of the first machining unit is movable on an independent slide, movable on the pressure beam, and/or on the independent beam.

Advantageously, the machining device may comprise, in known manner, alternatively to or in combination with the one or more breakout heads of the second machining unit, a breakout bar, positioned below the work table along the transverse direction, parallel to the machining line. The breakout bar may be movable with a motion which has a component along the vertical direction, using an actuator of an electric and/or pneumatic type and/or of other known types, with a linear, eccentric or tilting movement. The breakout bar is configured to make contact with a portion of lower surface of the slab which is on a side of the machining line, and, with the aid of the pressure beam, causes the breakout of the upper surface of the workpiece.

In an example, the breakout bar may be positioned on the pressure beam, in a relative portion positioned below the work table. In another example, the breakout bar may be positioned on the independent beam which supports the second machining unit, or in another example, the breakout bar may be positioned on a further independent beam and positioned below the work table.

Advantageously, the machine may comprise a heating unit, positioned below the work table, and movable with a motion which has a component along the vertical direction, by means of an actuator of an electric and/or pneumatic type and/or other known types, with a linear, eccentric or tilting movement, between a rest position wherein it is distal from the intermediate sheet and a machining position wherein it is proximal to the intermediate sheet for heating, so as to soften, the intermediate sheet interposed between the two slabs of glass of the slab of layered glass. In an example, the heating unit may be positioned on the pressure beam, in a relative portion positioned below the work table. In another example, the heating unit may be positioned on the independent beam which supports the second machining unit, or on the beam which supports the breakout bar, or the heating unit may be positioned on a further independent beam, positioned below the work table.

Advantageously, the heating unit may extend along the entire machining line, or it may be movable along the entire machining line. The heating unit may comprise a heating element, and/or a hot air heating system, and/or a laser heating system, and/or an infrared heating system, and/or a plasma heating system, and/or other known types of heating systems.

In an example, the machine may comprise a plurality of gripping devices, such as, for example, vacuum suction cups, aligned and positioned on the work table, which extend in the transverse direction, on a line parallel and proximal to the machining line. The purpose of the plurality of gripping devices is to block the slab during the cutting and breaking operations.

In an example, the plurality of gripping devices, during the step of separating the two portions of cut slab, may have the purpose of holding still a portion of the cut slab, that is to say, scored and broken out, whilst the other portion is moved along the longitudinal direction, for example by the pressure beam and by the portion of the work table below the pressure beam, as described above. Advantageously, the plurality of gripping devices may be movable along the vertical direction, by means of an electric and/or pneumatic and/or other known types of actuator, with a linear, or eccentric, or tilting movement for engaging and disengaging the lower surface of the slab.

In an example, the plurality of gripping devices may be movable along the longitudinal direction by means of an actuator of the electric and/or pneumatic and/or other known types, and has the purpose of separating a portion of cut slab, that is to say, scored and broken out, along the longitudinal direction, whilst the other portion of cut slab is held stationary between the pressure beam and the work table.

In another example, the plurality of gripping devices, the pressure beam and the portion of work table on which the slab rests, in the proximity of the machining device and below the pressure beam, may be movable along the longitudinal direction for separating the two portions of cut slab.

The process for cutting a slab with the machine comprises the following steps:
- positioning the slab on the work table in the proximity of the machining device;
- optionally pre-positioning the pressure beam;
- scoring both the surfaces along the machining line, upper and lower, of the slab, by the movement of the scoring heads of the first and second machining units. During this step, depending on the thickness and/or the type and/or the material of the machined slab, the pressure beam may be positioned at different heights close in the proximity of the upper surface of the slab, or in contact with it, without preferably imparting a pressing force;
- moving on the upper slab of glass, along the machining line, preferably in the opposite direction to that of the scoring, the upper breakout head, in such a way as to cause the breakout of the lower slab of glass, during this step the pressure beam may be positioned in a similar manner to the previous step;
- lifting a first portion of the layered slab of glass which is on one side of the machining line by the upward movement of the breakout bar and/or the breakout head of the second machining unit, which pushes the lower slab of glass upwards. In this step, the pressure beam may be at a predetermined distance from the slab, less than the distance at which it was in the previous step, in such a way that with the lifting of the slab caused by the breakout bar, the pressure beam can optionally come into contact with the slab, or the pressure beam can be in contact with the slab, but without imparting a pressing force, in such a way as to correctly perform the breakout step;
- heating the intermediate sheet of plastic material by localised heating, performed along the machining line, by means of the heating unit brought to the machining position. In this step, or shortly after, the pressure beam is moved downwards to impart a pressing force, so as to correctly complete the process for separating the cut portions of slab;
- cutting the intermediate sheet, heated by means of the cutting head of the intermediate sheet, of the first or second machining unit;
- separating the two portions of slab cut by the movement along the longitudinal direction of the portion of the work table below the pressure beam and of the pressure beam itself.

For the correct positioning of the pressure beam, during all the machining steps, the machine comprises a system for moving the pressure beam. The system for moving the pressure beam is configured for moving the pressure beam in all the positions which are necessary during machining between the raised position and the lowered position, and vice versa, and for moving towards or resting on the slab or the pressing. The movement and the positioning of the pressure beam may also depend on the thickness of the slab to be machined. The movement of the pressure beam during a machining cycle may comprise different steps, in particular three steps. The performance of each step is not limited to the performance of one of the other steps, meaning that the steps may be performed in a machining cycle in combination or individually, without thereby departing from the scope of protection of this invention.

Knowing the thickness value of a slab to be machined, it is possible, in an example, to provide a first step of pre-positioning the pressure beam, which is performed before starting a machining cycle. In the first step the pressure beam can be moved to a predetermined vertical height relative to the work table and, therefore, from the slab, a height which allows the movement of the slab on the work table, since it does not comprise contact of the pressure beam with the slab. This pre-positioning step is advantageous because it avoids, during each machining, having the pressure beam perform the entire stroke along the vertical axis.

The second step may comprise the pressure beam being moved to a position approaching the slab, at a predetermined distance from it, or for resting on it. In this step, the pressure beam does not impress the pressing force on the slab. This position of the pressure beam may, for example, be used during the operation for scoring the upper and lower slabs and/or during the movement of the breakout head of the first machining unit on the slab, in such a way as to cause the breakout of the lower slab of glass, and/or during the breakout of the upper slab by means of the breakout bar and/or the breakout head of the second machining unit.

The third step comprises moving the pressure beam to a position of contact with the slab, and the pressure beam exerts a pressing force on the slab, to guarantee the correct execution of some machining operations, such as, for example, the separation of the two portions of slab, required for cutting the intermediate sheet, and/or other machining operations which require a pressing force being imparted on the slab. The machine comprises a control unit which allows the execution of the machining programs which can be set by an operator by means of a graphical user interface.

In an example, an operator, using the graphical user interface, may enter specific "recipes" for the type of material and/or type of machining and/or predetermined thicknesses of the slabs to be machined. The positions and/or the functions of the pressure beam may be correlated in these recipes with the type of material, and/or the thickness of the slab to be machined, and/or the type of machining to be performed. The positions of the pressure beam may be, for example: the pre-positioning height of the pressure beam, and/or the height at which to position the pressure beam during the various machining steps, and/or the function of pressing on the slab performed by the pressure beam. Therefore, once a recipe has been set and stored in the control unit of the machine, for a predetermined material and/or for a predetermined machining, and/or for a predetermined thickness of the slab, the operator can call up the "recipe" every time the machine must machine the same material and/or repeat the same machining and/or machine slabs of the same thickness. For example, the operator can enter in the user interface the thickness of the slab to be processed, and the control unit of the machine can call up the recipe stored for that thickness, performing all the steps of positioning the pressure beam, with the positions and/or the specific functions for that predetermined thickness.

The movement system of the pressure beam may comprise a motion transmission mechanism, movable relative to the pressure beam along the transverse direction, which is a horizontal direction, perpendicular to the vertical direction. The motion transmission mechanism is configured to transform its movement relative to the pressure beam along the transverse direction in the movement of the pressure beam relative to the work table, between the raised position and the lowered position, and vice versa, to allow its positioning relative to the slab positioned on the work table. Advantageously, the movement system comprises an actuating system, which is coupled to the pressure beam and to the motion transmission mechanism, in such a way as to move the motion transmission mechanism relative to the pressure beam, along the transverse direction. The actuating system comprises a first actuator for moving the motion transmission mechanism relative to the pressure beam, along the transverse direction. The first actuator is configured to provide a continuous positioning of the pressure beam relative to the slab positioned on the work table, the continuous positioning allows the pressure beam to reach each predetermined and controlled position between the raised position and the lowered position, also in relation to the thickness of the slab which is being machined.

In one example, the first actuator is of the electric type, but in other examples it may be of the pneumatic, hydraulic or mixed type, or of other known types. In the case of a pneumatic actuator, the use of proportional valves may be provided.

Advantageously, the actuating system may comprise a second actuator, coupled in series to the first actuator, for moving the motion transmission mechanism relative to the pressure beam, along the transverse direction.

The second actuator may be configured to provide a discrete positioning of the pressure beam relative to the slab positioned on the work table. The discrete positioning allows the pressure beam to reach a number equal to "n" predetermined positions, where n is a discrete number. In one example, the second actuator is of the pneumatic type, but in other examples it may be of the electric, hydraulic or mixed type, or of other known types. In an example, there may be two predetermined positions, which depend on the thickness of the slab and/or the positioning of the first actuator. During movement of the pressure beam the two positions may be: a first position more distal from the slab and a second position more proximal to the slab, or contact of the pressure beam with the slab, with minimum preloading of the pressure beam P on the slab. Advantageously, the actuating system may comprise a third actuator, coupled in series with the second actuator, for moving the motion transmission mechanism relative to the pressure beam, along the transverse direction.

The third actuator may be configured to provide a discrete positioning of the pressure beam relative to the slab positioned on the work table in such a way that the pressure beam can apply a pressing force on the slab. The discrete positioning allows the pressure beam to reach a number equal to "n" predetermined positions, where n is a discrete number.

In an example, there may be two predetermined positions, which depend on the thickness of the slab and/or on the positioning of the first actuator and/or on the positioning of the second actuator. During movement of the pressure beam the two positions may be: a third position, preferably similar to the second position, proximal to the slab, or contact of the pressure beam with the slab, with minimum preloading of the pressure beam on the slab, and a fourth position, for pressing, of contact of the pressure beam P with the slab, with maximum preloading of the pressure beam P on the slab.

In one example, the third actuator is of the pneumatic type, but in other examples it may be of the electric, hydraulic or mixed type, or of other known types.

Advantageously, the second and the third actuator may be positioned opposite each other.

In an example, instead of the second and the third actuators there is only a single actuator, for example a pneumatic actuator with two pistons opposite each other, configured to perform the functions described for the second and by the third actuator.

In an example, the first step of the steps of moving the pressure beam during a machining cycle, that is to say, the pre-positioning step may be performed by the first actuator, the second step may be performed by the second and/or the third actuator and the third step may be performed by the third and/or the second actuator; in each of the steps, optionally, a precise positioning of the pressure beam may be performed by means of the first actuator, which as mentioned above allows a continuous positioning to be performed.

In another example, all the steps for moving the pressure beam during a machining cycle may be performed by a single actuator, for example the first actuator.

By way of example and without limiting the scope of the invention, all the possible combinations relating to the first and/or the second and/or the third actuator performing the first and/or the second and/or the third step of moving the pressure beam may be performed by experts in the field even in a different manner from that described above, without thereby departing from the scope of protection of the invention.

Advantageously, the movement system may comprise a bar or a device with a similar function, which extends along the transverse direction and is coupled to the actuating system. The actuating system is configured for moving the bar relative to the pressure beam along the transverse direction.

In an example, wherein the actuating system comprises only the first actuator, it may be coupled directly to the bar, by means of a first rod, moved by the first actuator. In another example, wherein the actuating system comprises the first actuator and the second actuator, the first actuator may be coupled by means of the first rod, moved by the first actuator, to a second rod moved by the second actuator, and the second actuator may be coupled to the bar. In a preferred example, wherein the actuating system comprises the first actuator, the second actuator and the third actuator, the first actuator may be coupled by means of a first rod, moved by the first actuator, to a second rod moved by the second actuator, and the second actuator may be coupled opposite the third actuator which may comprise a third rod connected to the bar. The couplings between the actuators may be performed by the experts in the field also with combinations different from those described above, without thereby departing from the relative scope of protection of the invention.

Advantageously, the motion transmission mechanism is coupled to the bar and to the work table, in such a way that a movement of the bar along the transverse direction corresponds to a movement of the motion transmission mechanism along the transverse direction, and therefore a movement of the pressure beam relative to the work table along the vertical direction.

In an example, the motion transmission mechanism may comprise an inclined surface. Advantageously, the motion transmission mechanism may comprise two inclined surfaces, each coupled to a respective end of the bar. Advantageously, the two inclined surfaces may have the same orientation, that is to say, they can have the same angle of inclination relative to the plane defined by the work table, and can be positioned in the same direction. In an example, each inclined surface may be coupled to a respective end of the bar.

Advantageously, each inclined surface may comprise a transversal side parallel to the transverse direction and an inclined side.

In an example, each transversal side is slidably coupled to the pressure beam along the transverse direction, and each inclined side is slidably coupled to the work table.

Advantageously, the slidable coupling of each inclined side with the work table may be performed by the slidable coupling to a respective upright of the two uprights to which the pressure beam is slidably coupled. In another example, two uprights different from those to which the pressure beam is slidably coupled may be used for the slidable coupling of each inclined side with the work table. In an example, the slidable coupling between the two uprights and the respective inclined sides may be performed by means of a runner-guide sliding system. The use of different sliding systems known to technicians in the field does not depart from the relative scope of protection of the invention.

In an example, the pressure beam is provided with two supports, each preferably positioned in the proximity of the respective transversal side, and the slidable coupling of each transversal side with the pressure beam may be made by means of the two supports.

In an example, the slidable coupling between the two supports and the respective transversal sides may be performed by means of a runner-guide sliding system. The use of different sliding systems known to technicians in the field does not depart from the relative scope of protection of the invention.

The example wherein each transversal side is slidably coupled to the pressure beam along the transverse direction, and each inclined side is slidably coupled to the work table, and all the consequent further features described above, are to be considered illustrative, but without limiting the scope of protection, since a trivial modification, within the reach of an expert in the field, that is to say, reversing the "transversal side-pressure beam" and "inclined side-pressure beam" couplings into: "transversal side-work table" and "inclined side-pressure beam" couplings, would not depart from the relative scope of protection of the invention.

In an example, the inclined surface may be made as a wedge element. Advantageously, the two inclined surfaces may be made as two wedge elements, wherein, in addition to the transversal side and the inclined side, there is a vertical side, which extends along the vertical direction. Advantageously, the two wedge elements may be coupled to the respective ends of the bar at the two vertical sides.

In an example, the pressure beam may have an internal volume, and the system for moving the pressure beam may be contained at least partly in the internal volume.

Advantageously, the pressure beam may have an internal volume and the system for moving the pressure beam may be contained completely in the internal volume of the pressure beam.

In another example, the motion transmission mechanism may comprise, in combination with or as an alternative to the inclined surface, a linkage and/or a crank mechanism. Advantageously, the motion transmission mechanism may comprise, alternatively or in combination with the two inclined surfaces, a pair of linkages and/or a pair of crank mechanisms, wherein each linkage and/or each crank mechanism is coupled to a respective end of the bar.

It should be understood that all the coupling methods described between the two inclined surfaces and the work table, and between the two inclined surfaces and the pressure beam, can also be used in the example in which the motion transmission mechanism comprises a pair of linkages and/or a pair of crank mechanisms.

These and other features of the invention will become more apparent from the following detailed description of a preferred, non-limiting example embodiment of it, with reference to the accompanying drawings, in which:
- Figure 1 illustrates a machine according to one or more aspects of the invention;
- Figure 2 illustrates a machine according to one or more aspects of the invention;
- Figure 3 illustrates an enlargement of a machining device of a machine according to one or more aspects of the invention;
- Figure 4 illustrates a pressure beam of a machine according to one or more aspects of the invention;
- Figure 5 illustrates a pressure beam in a predetermined position according to one or more aspects of the invention;
- Figure 6 illustrates a pressure beam in a predetermined position according to one or more aspects of the invention;
- Figure 7 illustrates a pressure beam in a predetermined position according to one or more aspects of the invention;
- Figure 8 illustrates a pressure beam in a predetermined position according to one or more aspects of the invention;

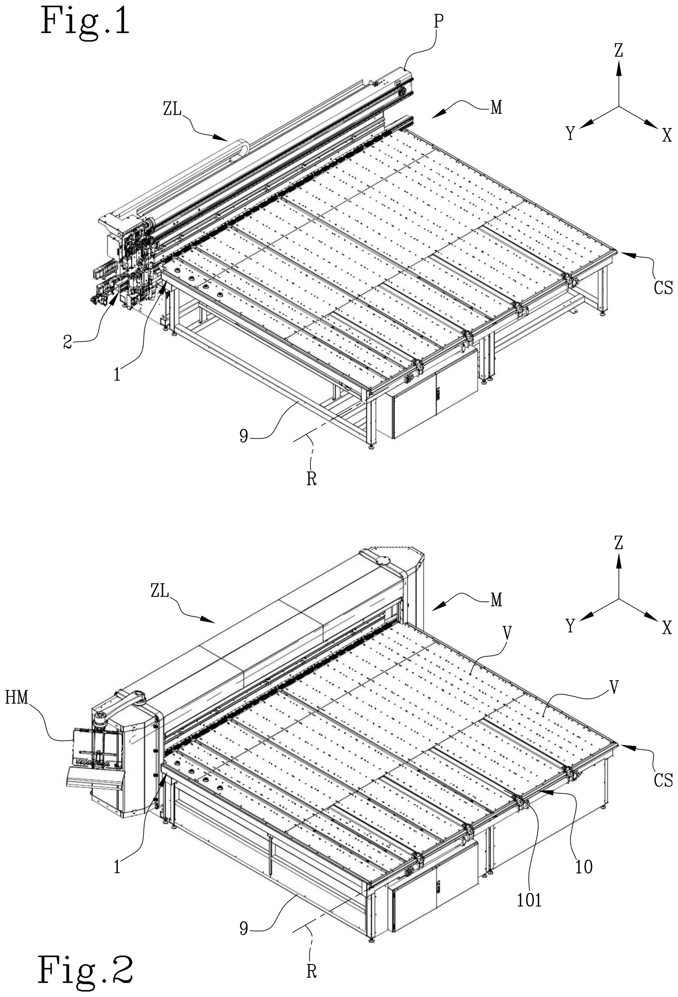

Figures 1 and 2 show in particular a machine M suitable for machining a workpiece, in particular a slab of glass, more specifically a slab of layered glass.

The machine M comprises a base 9, for resting on the ground, on which is positioned a work table 1, which extends along a longitudinal direction X, and is suitable for receiving and supporting the slab to be machined (not shown in the drawings).

The machine M also comprises a machining device 2 for machining the slabs, positioned, in the proximity of an end of the work table 1, which is thus divided into a zone CS for loading and/or unloading the slabs and a machining zone ZL.

The work table 1 comprises, in the loading and/or unloading zone CS, a tippable loading system 10, wherein a portion 101 of the work table 1, can be tipped, rotating about an axis R positioned in a transverse direction Y, at right angles to the longitudinal direction X, to facilitate the loading of the slab on the work table 1 by an operator, or by an automated loading system.

The work table 1 comprises a plurality of openings V, supplied with compressed air, which create an "air curtain", in such a way as to facilitate the transporting of the slab on the work table 1.

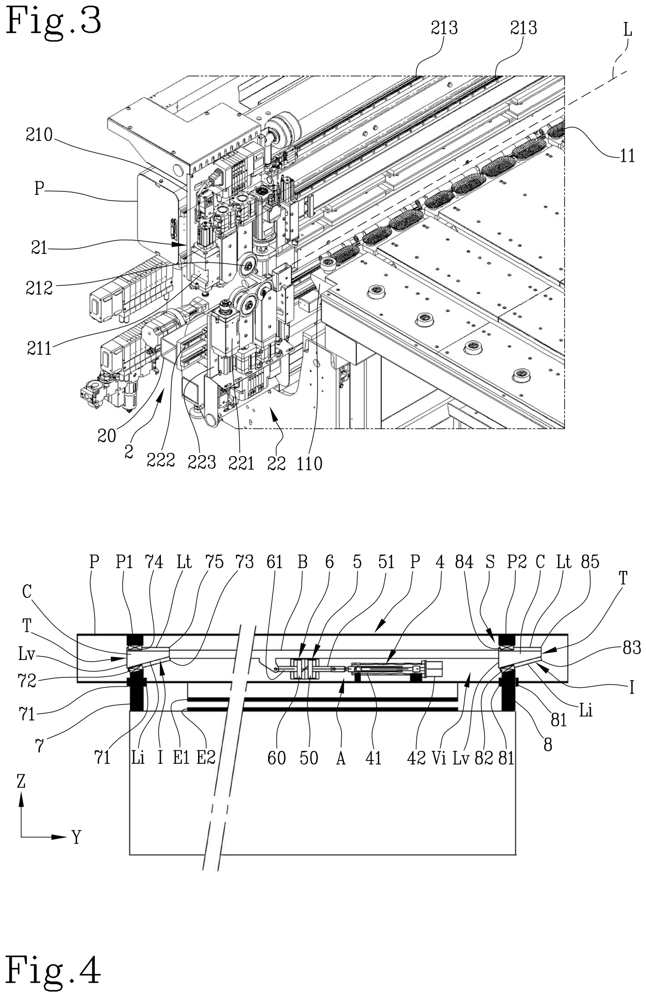

Figures 3 and 4 illustrate the machining device 2 which comprises a pressure beam P, and two uprights 7, 8, coupled to the work table 1, in particular to the machining zone ZL of the work table 1, respectively positioned at two opposite sides of the work table 1 along the transverse direction Y, which extend, from the work table 1 along a vertical direction Z. The pressure beam P is slidably coupled to the two uprights 7, 8, in such a way as to be able to move along the vertical direction Z, using respective runners 71, 81, positioned on the pressure beam P, slidable on respective guides (not shown in the drawings), positioned on the uprights 7, 8.

The pressure beam P comprises an elastic portion E1 which comes into contact with the slab positioned on the work table 1, and is made of elastic material, to prevent damaging the slab. For the same reason, the work table 1, in the machining zone ZL, in particular the zone below the pressure beam P and on which the slab rests, also comprises an elastic portion E2, 2, made of elastic material and facing the portion E1.

The zone below the pressure beam P, and on which the slab of the work table 1 rests, is movable along the longitudinal direction X, by means of a pneumatic actuator (not shown). The pressure beam P, being coupled to the zone of the work table 1 below the pressure beam P, is movable as one with the zone of the work table P, along the longitudinal direction X. Thanks to the mobility along the longitudinal direction X of the zone below the pressure beam P, and on which the slab of the work table 1 and the pressure beam P rests, the cut portion of slab is "gripped" between the elastic portions E1 and E2, in such a way as to be separated from the other portion of slab. The machining device 2 comprises a first machining unit 21, slidably coupled to the pressure beam P by means of a slide 210. The slide 210 is movable along the transverse direction Y, defining a machining line L, on a pair of guides 213, positioned along the pressure beam P, and is moved by an electric actuator (not shown in the drawings). The first machining device 2 comprises a scoring head 211, configured for scoring the upper surface of the slab along the machining line L, thanks to the movement of the first machining device 2 along the transverse direction Y. The scoring head 211 is movable, by means of a pneumatic type actuator (not shown), along the vertical axis Z between a scoring position in which it scores, and a rest position, distal from the slab. The first machining device 2 comprises a breakout head 212, comprising a roller, suitable for coming into contact with the upper part of the slab so as to cause the breakout of the underside surface of the slab. The breakout head 212 is movable, using a pneumatic type actuator (not illustrated) along the vertical axis Z between a rest position, distal from the slab and a breakout position in which it breaks out.

The machining device 2 comprises a second machining unit 22 positioned below the work table 1, movable along the transverse direction Y, by means of an electric actuator (not shown). The second machining unit 22 is slidably coupled to a beam 20, positioned below the work table, by means of a slide 223, which can be moved by an electric actuator (not illustrated) on guides 222 positioned on the beam 20, positioned in the transverse direction Y, at the machining line L.

The second machining unit 22 comprises a scoring head 221 configured for scoring the lower surface of the slab along the machining line L. The scoring head is movable, using a pneumatic type actuator (not shown), along the vertical axis Z, between a scoring position in which it scores, and a rest position, distal from the slab. The second machining unit 22 comprises a head for cutting the intermediate film of the slab (not illustrated) which is movable along the transverse direction Y using an electric actuator and along the vertical direction Z, between a cutting position in which it cuts, and a rest position in which it is distal from the film, using a pneumatic actuator.

The machining device comprises a breakout bar, positioned below the work table 1 along the transverse direction Y, and movable with a motion with a component of movement along the vertical direction Z, with a kinematic mechanism controlled by pneumatic actuators for producing an eccentric movement relative to the transverse direction Y.

The machine M comprises a heating unit with heating elements (not illustrated), which extends along the entire machining line L, positioned below the work table 1, and movable with a motion with a component along the vertical axis Z, by means of a kinematic mechanism controlled by a pneumatic actuator, between a rest position in which it is distal from the intermediate sheet and an operating position in which it is proximal to the intermediate sheet for heating it.

In an example, the machine M comprises a plurality of vacuum suction cups 11, aligned and positioned on the work table 1, in the proximity of the machining line L, which extend in the transverse direction Y. The plurality of suction cups 11 is positioned on a beam 110 movable along the vertical direction Z, by means of a pneumatic actuator, for engaging and disengaging the lower surface of the slab and for lifting the portion of cut slab during the separating step, wherein the other portion of cut slab is retained between the elastic portions E1 and E2. The machine M comprises a control unit which allows the execution of the machining programs which can be set by an operator using a graphical user interface HM.

The movement system S of the pressure beam P comprises a motion transmission mechanism T, which is movable relative to the pressure beam P along the transverse direction Y, and configured to transform its movement relative to the pressure beam P along the transverse direction Y into the movement along the vertical direction Z of the pressure beam P relative to the work table 1 and, therefore, relative to the slab, between the raised position and the lowered position, and vice versa, to allow the relative positioning in relation to the slab positioned on the work table 1.

The movement system S comprises an actuating system A which in turn comprises a first actuator 4, of the electric type. The first actuator 4 comprises a first screw rod 41, moved along the direction Y by an electric motor 42. The actuating system A also comprises a second actuator 5, preferably of the pneumatic type, coupled to the first actuator 4 and positioned in series relative to it. The second actuator 5 comprises a piston 50 and a second rod 51, wherein the first screw rod 41 is coupled to the second rod 51, in such a way that the first actuator 4 is coupled in series to the second actuator 5. The actuating system A also comprises a third actuator 6 preferably of the pneumatic type, coupled to the second actuator 5 and positioned opposite, in series relative to it. The third actuator comprises a piston 60 and a third rod 61. The third actuator 6 is coupled to the second actuator 5, in such a way that the first actuator 4, the second actuator 5 and the third actuator 6 are coupled in series.

The movement system S comprises a bar B, which extends along the transverse direction Y and is coupled to the rod 61 of the third actuator 6, in such a way as to be coupled to the entire actuating system A. The actuating system A is configured for moving the bar B relative to the pressure beam P along the transverse direction Y.

The motion transmission mechanism T comprises two inclined surfaces I, made as two wedge elements C, each having a transversal side Lt, parallel to the transverse direction Y, an inclined side Lt and a vertical side Lv, parallel to the vertical direction Z.

The two wedge elements C are positioned with the same orientation, that is to say, they have the same angle of inclination, relative to the plane defined by the work table 1, and are positioned in the same direction.

Each vertical side Lv of each wedge element C is coupled to a respective end of the bar B.

The pressure beam P comprises two supports, P1, P2, each support comprising a respective runner 74, 84, to which each transversal side Lt is slidably coupled, by a respective guide 75, 85, positioned on the transversal side Lt, along the transverse direction Y. Each upright 7, 8 comprises a respective runner 72, 82, to which each inclined side Li is slidably coupled, by a respective guide 73, 83 positioned on the inclined side Li, along an inclined direction defined by the inclined side Li.

During the movement of the actuating system A, a movement of the actuating system A, determined by the movement of one or more of the rods 41, 51, 61, corresponds to a movement of the bar B along the transverse direction Y, the movement determining a sliding of the runners 74, 84 on the guides 75, 85 and the runners 72, 82 on the guides 73, 83, therefore causing a sliding of the pairs of runners 71 and 81, on the respective guides, which generates a movement of the pressure beam P in the vertical direction Z, towards or away from the work table 1, and, therefore, from the slab, as a function of the direction of movement along the transverse direction Y of the actuating system A.

The first actuator 4 is configured to provide a continuous positioning of the pressure beam P relative to the slab positioned on the work table 1, the continuous positioning allows the pressure beam P to reach each predetermined and controlled position between the raised position and the lowered position, and it is therefore used preferably to perform a pre-positioning, or to perform a precise positioning, during the various steps for machining the slab.

The second actuator 5 is configured to provide a discrete positioning of the pressure beam P relative to the slab positioned on the work table 1. The discrete positioning of the second actuator 5 allows the pressure beam P to reach a number equal to two respective predetermined positions, relative to the slab, which depend on the thickness of the slab and/or the positioning of the first actuator 4. The two positions are given by the extraction and retraction of the piston of the second actuator 5. During the movement of the pressure beam P the two positions are: a first position more distal from the slab and a second position more proximal to the slab, or contact of the pressure beam P, in particular of the elastic portion E1, with the slab, with minimum preloading of the pressure beam P on the slab. In the first position the piston of the second actuator 5 is retracted, and in the second position it is extracted.

The third actuator 6 is configured to provide a discrete positioning of the pressure beam P relative to the slab positioned on the work table 1.

The discrete positioning of the third actuator 6 allows the pressure beam P to reach a number equal to two respective predetermined positions, which depend on the thickness of the slab and/or the positioning of the first actuator 4 and/or the positioning of the second actuator 5. The two positions are given by the extraction and retraction of the piston of the third actuator 6. During movement of the pressure beam P the two positions are: according to a third position, preferably similar to the second position, proximal to the slab, or contact of the pressure beam P, in particular of the elastic portion E1 with the slab, with minimum preloading of the pressure beam P on the slab, and a fourth position, for pressing, of contact of the pressure beam P, in particular of the elastic portion E1, with the slab with maximum preloading of the pressure beam P on the slab.

The first 5 and the second 6 pneumatic actuators, having the same boring and powered by the same pressure, produce the same force, the different force imparted by the pressure beam P is due to the thickness of the slab and the distance of the pressure beam from the slab.

During the machining cycle of a slab with the machine M, the movement of the pressure beam P comprises different steps, related to different machining operations:
- a first step of pre-positioning the pressure beam P, which is a function of the thickness of the slab to be machined, and wherein the pressure beam P is moved, by means of the first actuator 4, to a predetermined vertical height relative to the work table 1, in such a way as to allow the movement of the slab on the work table 1;
- a second step, which comprises the pressure beam P being moved, by means of the second actuator 5, to the second position, more proximal to the slab, or of contact with the slab with a minimum preloading of the pressure beam P on the slab (correlated for example with the scoring and/or breakout machining);
- a third step, which comprises moving the pressure beam P, by means of the third actuator 6, to the fourth pressing position, wherein there is contact of the pressure beam P with the slab, with maximum preloading of the pressure beam P on the slab.

In each of the steps, optionally, a precise positioning of the pressure beam P may be performed by means of the first actuator 4 which, as mentioned above, allows a continuous positioning to be performed.
pressure beam P (correlated, for example, with the operation of separating the two portions of slab).

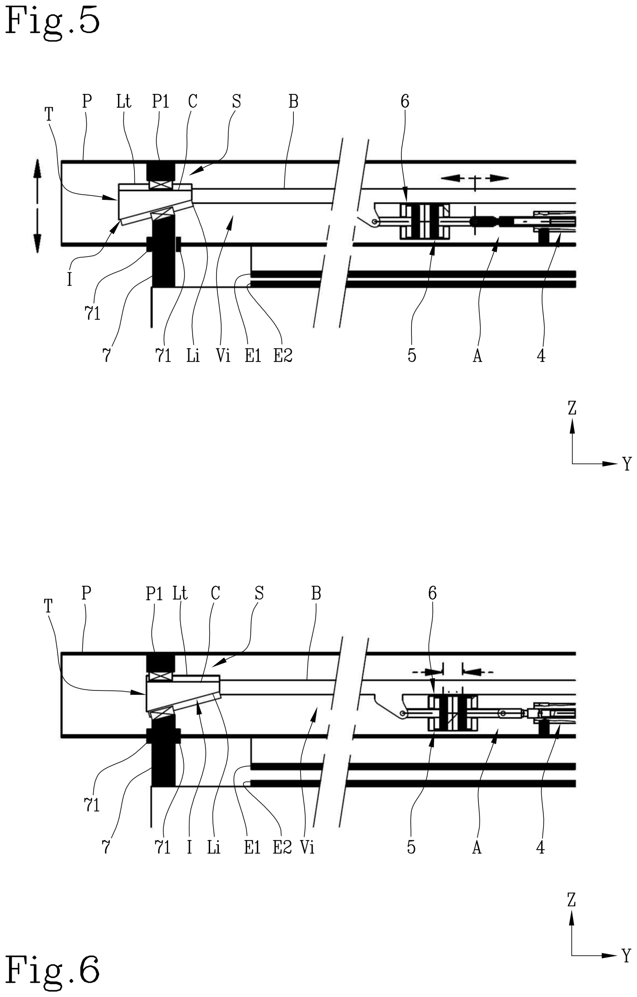

Figure 5 shows a lowered position of the pressure beam P, obtained by only moving the first actuator 4, by moving the first screw rod 41, the actuators 5 and 6 are in the respective positions with the piston retracted. This position may, for example, correspond to the first step of pre-positioning the pressure beam P, for machining a thin slab.

Figure 6 shows a completely raised position of the pressure beam P, wherein the screw rod 41 of the first actuator 4 is completely retracted, and the second 5 and the third 6 actuators are in the respective positions with the piston retracted.

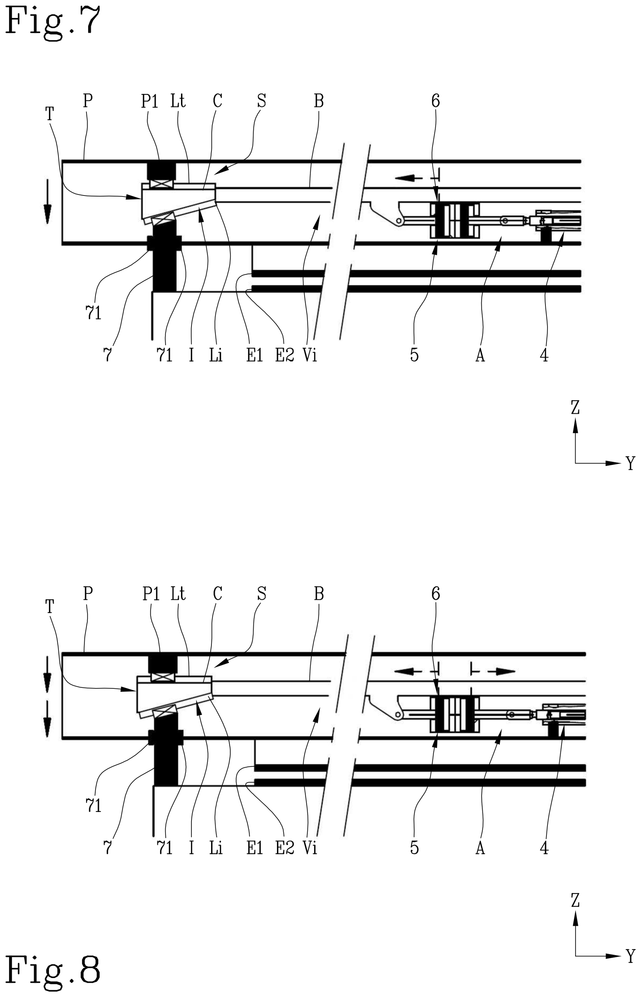

Figure 7 illustrates the second position of the pressure beam P and, more proximal to the slab, or contact with the slab with a minimum preloading of the pressure beam P on the slab, obtained with the movement of the first actuator 4, by the movement of the first screw rod 41, and the movement of the rod 51 moved by the second actuator 5 which has the piston in the extracted position, the third actuator 6 is with the piston in the retracted position. This position may correspond, for example, to the second step of moving the pressure beam.

Figure 8 illustrates the fourth position of the pressure beam P, wherein there is contact of the pressure beam P with the slab, with maximum preloading of the pressure beam P on the slab, obtained with the movement of the first actuator 4, by the movement of the first screw rod 41, and the movement of the rod 51 moved by the second actuator 5, which has the piston extracted, and the movement of the rod 61 of the third actuator 6, which also has the piston extracted. This position may correspond, for example, to the third step of moving the pressure beam.

The pressure beam P has an internal volume Vi and the system S for moving the pressure beam P is contained completely in the internal volume Vi of the pressure beam P.

The present invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A machine (M) for machining a workpiece, in particular a slab of glass, wood, wood-derived materials, plastic materials, composite materials, stone materials, metal, comprising:
- a work table (1) for supporting the workpiece;
- a machining device (2) for machining the workpiece;
- a pressure beam (P), movable relative to the work table (1), along a vertical direction (Z) perpendicular to the work table (1) and to the workpiece, between a raised position, where it is distal to the work table (1), and a lowered position, where it is proximal to the work table, and is configured for holding the workpiece down on the work table (1); and
- a movement system (S) for the pressure beam (P), for moving the pressure beam (P) between the raised position and the lowered position, and vice versa,
wherein the movement system (S) comprises:
- a motion transmission mechanism (T), movable relative to the pressure beam (P) along a transverse direction (Y) perpendicular to the vertical direction (Z), the motion transmission mechanism (T) being configured for converting its movement relative to the pressure beam (P) into the movement of the pressure beam (P) relative to the work table (1), hence relative to the workpiece, between the raised position and the lowered position, and vice versa;
- an actuating system (A), the actuating system (A) being coupled to the pressure beam (P) and to the motion transmission mechanism (T), and being configured for moving the motion transmission mechanism (T) relative to the pressure beam (P), along the transverse direction (Y); and
- a bar (B) extending along the transverse direction (Y) and coupled to the actuating system (A), wherein the actuating system (A) is configured for moving the bar (B) relative to the pressure beam (P), along the transverse direction (Y),
the machine being **characterised in that** the motion transmission mechanism (T) comprises two inclined surfaces (I) having the same orientation, wherein each inclined surface (I) is coupled to a respective end of the bar (B), wherein each inclined surface (I) comprises a transversal side (Lt) parallel to the transverse direction (Y) and an inclined side (Li), wherein each transversal side (Lt) is slidably coupled to the pressure beam (P) along the transverse direction (Y), and wherein each inclined side (Li) is slidably coupled to the work table (1).

2. The machine (M) according to claim 1, wherein the motion transmission mechanism (T) comprises an inclined surface (I), and/or a linkage, and/or a crank mechanism, coupled to the pressure beam (P) and to the work table (1).

3. The machine (M) according to claim 1, wherein the actuating system (A) comprises a first actuator (4), preferably electric, for moving the motion transmission mechanism (T) relative to the pressure beam (P), along the transverse direction (Y), the first actuator (4) being configured for providing a continuous positioning of the pressure beam (P) relative to the workpiece positioned on the work table (1).

4. The machine (M) according to claim 3, wherein the actuating system (A) comprises a second actuator (5), preferably pneumatic, located in series with the first actuator (4), for moving the motion transmission mechanism (T) relative to the pressure beam (P), along the transverse direction (Y), the second actuator (5) being configured for providing a discrete positioning of the pressure beam (P) relative to the workpiece positioned on the work table (1).

5. The machine (M) according to claim 4, wherein the actuating system (A) comprises a third actuator (6), preferably pneumatic, positioned in series with the second actuator (5), for moving the motion transmission mechanism (T) relative to the pressure beam (P), along the transverse direction (Y), the third actuator (6) being configured for providing a second discrete positioning of the pressure beam (P) relative to the workpiece positioned on the work table (1) in such a way that the pressure beam (P) exerts a pressing force on the workpiece.

6. The machine (M) according to claim 2, wherein the inclined surface (I), and/or the linkage, and/or the crank mechanism, is coupled to the bar (B), to the pressure beam (P) and to the work table (1).

7. The machine (M) according to claim 1, wherein the work table comprises two uprights (7, 8) respectively positioned at two opposite sides of the work table and projecting from the work table along the vertical direction (Z), and wherein each inclined side (Lt) is coupled to a respective upright (7, 8).

8. The machine (M) according to any one of the preceding claims, wherein the pressure beam (P) has an internal volume (Vi), and wherein the system for moving the pressure beam (P) is contained completely in the internal volume (Vi).

9. The machine (M) according to any one of the preceding claims, wherein the machining device (2) comprises:
- a first machining unit (21), slidably coupled to the pressure beam (P) along the transverse direction (Y) and positioned above the work table (1), the first machining unit (21) comprising a scoring head (211), configured to score an upper surface of the workpiece, and a breakout head (212), configured to make contact with the upper surface of the workpiece, in such a way as to cause the breakout of the underside surface of the workpiece;
- a second machining unit (22), coupled to the work table (1) in a slidable fashion along the transverse direction (Y) and positioned below the work table (1), the second machining unit (22) comprising a scoring head (221), configured for scoring the underside surface of the workpiece; and
- a breakout bar, positioned below the work table (1), extending parallel to the transverse direction (Y), movable along the vertical direction (Z) and configured for making contact with and lifting an underside surface of the workpiece, in such a way as to cause the breakout of the top surface of the workpiece.
